# EUROPEAN PATENT APPLICATION

(11) **EP 4 000 821 A1**
(43) Date of publication of application: **25.05.2022**
(21) Application number: 21209392.6
(22) Date of filing: 19.11.2021
(51) Int. Cl.: B25J 15/00, B25J 9/10, B25J 19/02, B25J 9/12, B25J 18/02

(54) **TOOL GRIPPING DEVICE**

(30) Priority: 19.11.2020 IT 202000027834
(71) Applicant: Faspar S.p.A., 20087 Robecco sul Naviglio (MI) (IT)
(72) Inventor: AIME, Paolo Ottavio, 20087 Robecco sul Naviglio (MI) (IT); FERRARIS, Andrea, 20087 Robecco sul Naviglio (MI) (IT)
(74) Representative: Scilletta, Andrea

(57) **Abstract**

A gripping device (1) comprises gripping members (5), a support structure (9) configured to support and move the gripping members (5) along a gripping direction (10), connecting plates (14) configured to connect the support structure (9) to a frame (2), wherein the support structure (9) is configured to vary its length along the gripping direction (10) between a retracted position and an extracted position, wherein the gripping device (1) comprises movement members and transmission members configured to selectively drive in movement cradle elements (15, 16, 17) which make up the support structure (9) and synchronize their reciprocal movement along the gripping direction (10).

## Description

The present invention relates to a gripping device configured for gripping cutting equipment used in "slitter" type sheet metal cutting lines.

In particular, the present invention relates to a gripping device of the type configured to equip a handling robot, to allow gripping, handling and preparation of cutting tool for a "slitter" type cutting line.

In the description and in the following claims explicit reference will be made to a cutting equipment comprising tools such as circular or annular cutting blades, separators, rubber rings, etc. usable for the processing of strips of metallic material wound on reels, but the person skilled in the art will have no difficulty in understanding how the present invention can be easily implemented also in other field of the art, in particular in all those field wherein it is necessary picking up or storing tools from a magazine.

It is known that in the metal strip processing field, tools are configured as annular elements which, when not in use, are stored in a magazine, hung from one or more tool-holder shafts projecting from a fixed wall or from an upright mounted swivel on a base. Several tools can be positioned alongside each other along the same tool holder shaft.

The use of a gripping device configured to selectively grasp the individual circular tools of the cutting equipment, to pick them up or store them with respect to a warehouse or, more generally, to a support arm or shaft has been known for some time.

In general, such a gripping device is movably engaged along a support frame which can in turn be moved and is configured to grasp and individually move circular tools between a pickup point or station and a release point or station.

The support frame has a linear development along a vertical direction or in other words along a direction normal to the floor on which the gripping device rests.

The support frame can be moved along a track and can be selectively operated in rotation around an axis of rotation substantially parallel to the vertical direction of the support frame itself.

The gripping device, in turn, is slidingly associated with the support frame along the linear development direction. Furthermore, the gripping device comprises a gripping element which can be moved selectively with respect to the support frame along a gripping direction which is oriented normal to the linear development direction.

In general, the gripping device comprises a support arm along which gripping members are slidably engaged, configured to grip or release a cutting tool. In particular, the gripping members are connected to the support arm by means of a carriage, which can be selectively operated in motion by means of suitable actuation members.

The gripping members, therefore, can be moved towards or away from the support frame along the gripping direction.

Such a gripping device has some limits of use with reference in particular to the ability to ensure precise movement in the case of cutting tools of high weight, such as those used in slitter-type cutting lines.

The high weight of the cutting equipment determines deformations or bending in the gripping device, especially when the gripping elements, following a high excursion in their movement, are positioned cantilevered with respect to the support arm.

These deformations determine an inaccuracy in the positioning of the gripping device which must be compensated for by means of complex software corrections to be imparted to the moving members of the gripping device. Incorrect or inaccurate positioning of the gripping device can cause accidental impacts during the handling of individual tools, with consequent damage to them and the need for their replacement, if possible, with additional cutting tools.

Damage to the cutting tools determines a tooling dead time and therefore of non-operation of the entire cutting line, with negative repercussions on production costs.

Furthermore, any impacts or overloads can damage the gripping device itself.

Documents US2020/0269435A1, CN 111890335A and CN 111055271A describe some examples of tool or object handling systems in general.

The object of the present invention is to allow in a simple and efficient way to provide a gripping device configured to move cutting tools, even of considerable weight, of the type used in a slitter line cutting equipment in a precise manner.

Another object of the present invention is to provide a gripping device configured for gripping individual tools that make up a cutting equipment, wherein the gripping device comprises a small number of actuation members for moving gripping members comprised in the gripping device itself.

A further object of the present invention is to provide a gripping device configured to grip individual tools that make up a cutting equipment, wherein the gripping device comprises safety members configured to limit the stresses acting on it and avoid its damage.

The specific object of the invention is a gripping device configured for gripping a tool, wherein the gripping device comprises:
gripping members,
a support structure configured to support and move the gripping members along a gripping direction,
wherein the gripping members are housed inside the support structure and connected to it slidingly by means of a guide and can be operated smoothly in motion along the gripping direction,
connection plates operatively connected externally to opposite sides of the support structure and configured to connect the support structure to a frame,
the support structure being configured to vary its length along the gripping direction between a retracted position, wherein it has a minimum length, and an extracted position wherein it has a maximum length,
wherein the support structure comprises cradle elements each delimiting a bottom portion that delimits a concavity facing a top portion of the cradle elements, wherein the top portion is open, the cradle elements being housed internally one to each other and connected to each other smoothly along the gripping direction,
the gripping device comprising movement members and transmission members for selectively driving the cradle elements in motion and synchronizing their mutual movement along the gripping direction.

According to another aspect of the invention, each of the cradle elements can have a respective open top portion to allow access to its interior.

According to a further aspect of the invention, the support structure can comprise an external cradle element, an internal cradle element and at least one intermediate cradle element interposed between the external cradle element and the internal cradle element and guide members configured to guide the mutual sliding between the outer cradle element, the intermediate cradle element and the inner cradle element along the gripping direction.

According to an additional aspect of the invention, the guide members can comprise rails aligned parallel to the gripping direction and slidingly engaged in respective sliding supports.

According to another aspect of the invention, the external cradle element, the internal cradle element and the at least one intermediate cradle element can have a "U" or "V" or semicircular or semi-elliptical cross section or polygonal able to delimit a bottom portion delimited between opposite lateral portions, wherein the bottom portion delimits a concavity.

According to a further aspect of the invention, at least one of the external cradle element, the internal cradle element and the at least one intermediate cradle element can be made by joining several plate elements mutually connected by respective brackets connection.

According to an additional aspect of the invention, the gripping members can be slidingly connected to the support structure by means of a guide, wherein the guide comprises a track connected to a portion of the support structure and a carriage which engages the track slidingly along the gripping direction, the gripping device comprising actuation members operatively connected to the carriage and configured to selectively actuate the carriage along the gripping direction between a retracted position, wherein the gripping members are positioned at the gripping device and a position wherein the gripping members protrude from the gripping device, wherein the guide and the actuation members are housed inside the cradle elements.

According to another aspect of the invention, the movement members can comprise at least one motor unit connected to one of the connecting plates and transmission members comprising at least one rack constrained externally to a lateral portion of the external cradle element and configured to be engaged by a motorized pinion comprised in the at least one motor unit, the at least one rack being aligned parallel to the gripping direction.

According to a further aspect of the invention, the transmission members can comprise at least one drive belt wrapped around two pulleys rotatably connected to the external cradle element, the at least one drive belt having a first branch delimited between the pulleys which extends externally to the external cradle element and a second branch delimited between the pulleys which extends internally to the external cradle element, wherein the first branch is operationally connected to one of the connecting plates and the second branch is connected to a lateral portion of the at least one intermediate cradle element.

According to an additional aspect of the invention, the transmission members can comprise a second belt system comprising at least one return belt wound around two internal pulleys each connected in rotation to a lateral portion of the intermediate cradle element wherein the at least one return belt has an external branch delimited between the internal pulleys that extends externally to the intermediate cradle element and an internal branch delimited between the internal pulleys that extends internally to the intermediate cradle element, wherein the external branch is operationally connected to the outer cradle element and the inner branch is connected to the at least one inner cradle element.

According to another aspect of the invention, the at least one drive belt and the at least one return belt can be aligned parallel to each other and to the gripping direction.

According to a further aspect of the invention, the gripping device can comprise at least one force limiting device operatively connected to the actuation members and configured to limit an axial force transmitted by the at least one motor unit to the support structure in case of exceeding a predetermined axial force value, the force limiting device comprising a body operatively connected to the inner cradle element and a rod selectively sliding through the body along a direction parallel to the gripping direction, the rod being operatively connected to the at least one return belt.

According to a further aspect of the invention, the rod can be aligned along an axial direction parallel to the gripping direction and has one end connected to a carriage slidingly engaged along a linear guide associated with the internal cradle element, wherein the carriage in turn is operatively connected to a section of the internal branch of the at least one return belt.

According to an additional aspect of the invention, the gripping device may comprise position sensors configured to detect the position of at least one of the outer cradle element, the inner cradle element and the at least one intermediate cradle element, the sensors being operatively connected to at least one logic control unit in turn operatively connected to the moving members and to the gripping members for controlling and controlling the operation of the gripping device and the movement of the support structure along the gripping direction.

The advantages offered by the gripping device according to the invention are evident.

In particular, providing a sturdy gripping device makes it possible to ensure high precision in the handling of the gripping members even in the presence of heavy tools, regardless of whether these gripping members are positioned cantilevered or not with respect to the gripping device.

Furthermore, the gripping device according to the invention comprises an extendable support to which the gripping members are operatively connected to the advantage of a high flexibility of use which allows to reach pick-up/release points at greater distances than those that can be covered by the gripping devices of the traditional type.

The present invention will now be described, by way of a non-limiting example, according to its preferred embodiments, with particular reference to the Figures of the attached drawings, wherein:
Figure 1 shows a perspective view of a gripping device according to the invention installed on board of a handling structure;
Figure 2 shows a perspective view from above of a gripping device according to the invention, in a retracted operational configuration;
Figure 3 shows a perspective view from below of the gripping device of Figure 2;
Figure 4 shows a perspective view from above of the gripping device according to the invention in an extended operating configuration
Figure 5 shows a perspective view from below of the gripping device of Figure 4;
Figures 6 and 7 show detailed perspective views of some components of the gripping device according to the present invention,
Figure 8 shows a detailed rear view of some components of the gripping device according to the invention.

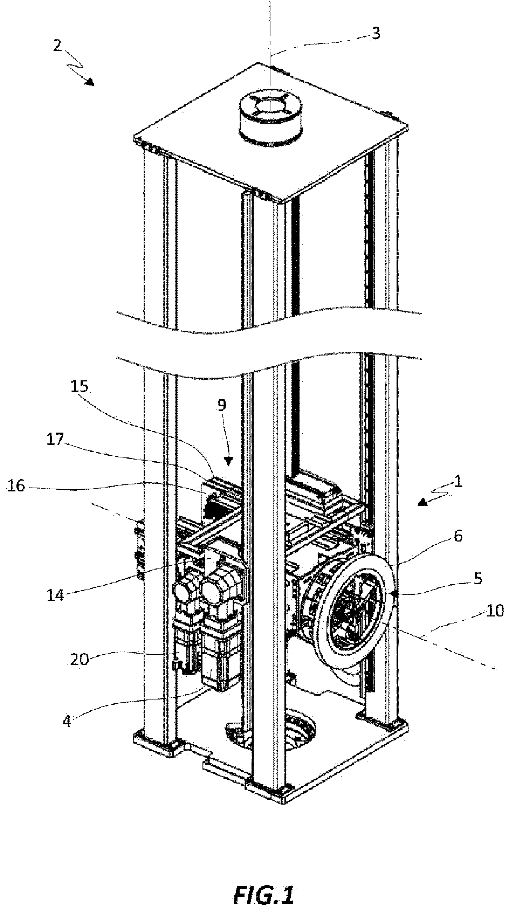

With reference to Figure 1, it is possible to observe a preferred embodiment of a gripping device configured to pick up cutting equipment, of the type used in slitter cutting lines, and wholly indicated with 1.

In general, the gripping device 1 is configured to be operationally connected to a frame 2 (see Figure 1) which is in turn configured to move the gripping device 1 in the space, to allow used individual cutting equipment to be picked up and moved with respect to a withdrawal point and a release point.

The gripping device 1 is slidably connected to the frame 2 along a sliding direction 3 which extends between a bottom portion of the frame 2 and a top portion of the frame 2 itself or, in other words, along a vertical direction.

In turn, the frame 2 is movably connected to a linear guide and is capable of selectively rotating around a direction parallel to the sliding direction 3.

The frame 2 comprises movement members 4 operatively connected to the gripping device 1 and configured to selectively control the movement of the latter along the sliding direction 3.

The frame 2 and the moving members 4 are not specific objects of the present invention. For this reason they will not be described further below.

The gripping device 1 comprises gripping members, indicated as a whole with 5, configured to selectively pick up and hold individual elements 6 that make up the cutting equipment of a slitter-type cutting line.

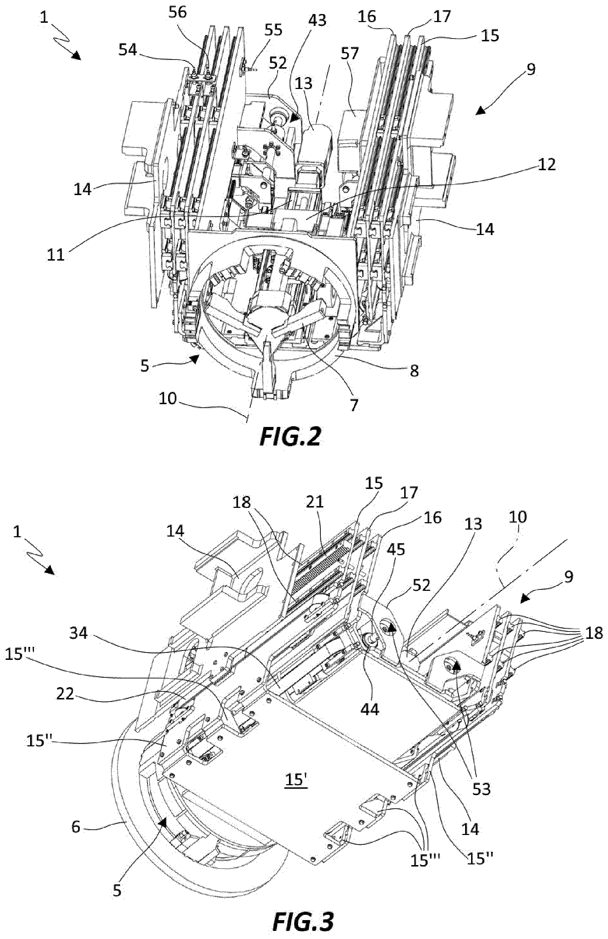

With reference to what is illustrated by way of example in the attached Figures 1 and 3, the gripping members 5 are configured to grip and hold an annular-type cutting blade 6, although it is understood that they are also configured for gripping further annular elements. such as spacers or rubber rings suitable for composing a previously described cutting equipment.

The gripping members 5 comprise gripping elements of a mechanical type, such as a self-centering mandrel 7 or similar or an electromagnet 8 (see Figure 2) or a combination thereof (the latter option is illustrated in the attached Figures 1-5), without any limitation.

In general, similar gripping members 5 are known in the field and, as such, do not form a specific object of the present invention except in relation to their use in the gripping device 1.

In the following description and in the attached Figures, the disclosure and representation of the gripping members 5 will be limited to those components useful for understanding the present invention.

The gripping device 1 comprises a support structure 9 configured to support and move the gripping members 5 along a gripping direction 10.

The support structure 9, in turn, is configured to be operatively connected to the frame 2.

The support structure 9 houses the gripping members 5 and extends along a direction parallel to that defined by the gripping direction 10.

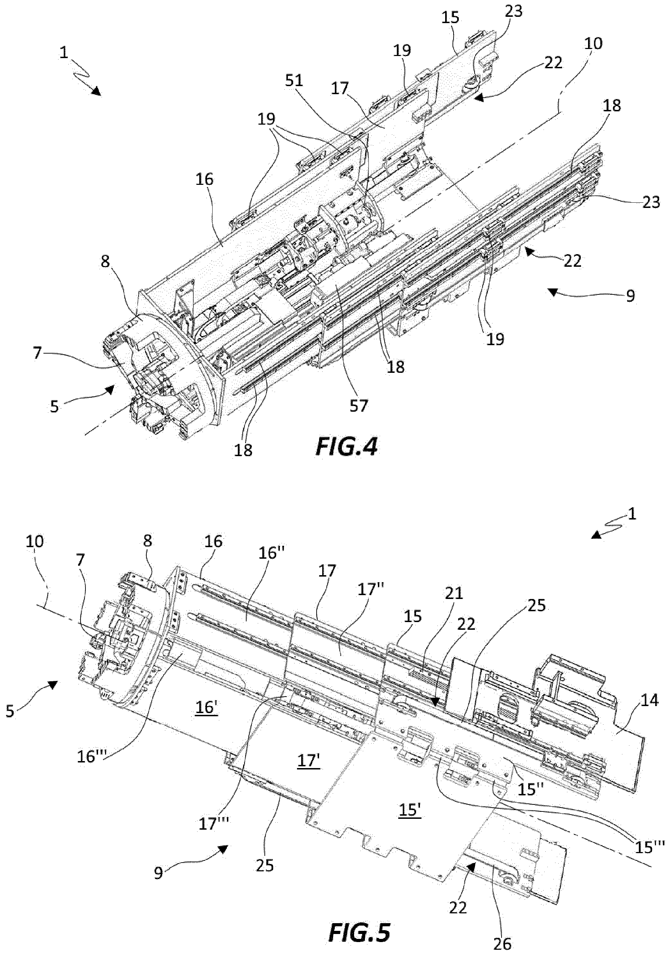

The support structure 9 has a variable geometry, in the sense that it is configured to vary its length along the gripping direction 10 between a retracted position, wherein it has a minimum length (see for example Figures 2 and 3), and an extracted position wherein it has the maximum length (see Figures 4 and 5).

The gripping members 5, in turn, are connected slidingly to the support structure 9, by means of a guide, so as to be able to vary their position relative to the support structure 9 itself.

The guide comprises a track 11, connected to a portion of the support structure 9 and a carriage 12 which engages the track 11 slidingly, along the gripping direction 10.

The gripping device 1 comprises actuation members 13 operatively connected to the carriage 12 and configured to actuate it selectively along the gripping direction 10 between a retracted position, wherein the gripping members 5 are positioned in proximity to the gripping device 1 (see for example Figure 2) and an extracted position wherein the gripping members 5 protrude in a cantilevered way from the gripping device 1.

The actuation members 13 are of the type within the reach of the person skilled in the art and include, by way of example, an actuation such as a piston, if desired telescopic, or a rack-pinion assembly or a worm screw which engages a nut associated with the carriage 12 or equivalent solutions, which will not be further described.

As mentioned, the gripping device 1 is configured to be connected slidingly to a frame 2. In this regard, the gripping device 1 comprises connecting plates 14 configured to connect the support structure 9 to a frame 2.

The connecting plates 14 are positioned on opposite sides of the support structure 9. In particular, the connecting plates 14 are positioned diametrically opposite each other with respect to the gripping direction 10.

The support structure 9 comprises cradle elements, housed one inside the other and connected slidingly to each other along the gripping direction 10.

The term "cradle element" is intended to indicate an elongated element along the gripping direction 10 which has a bottom portion that delimits a concavity facing upwards or in other words towards the top of the cradle element itself and an open top portion.

The open top portion promotes the access inside the support structure 9 and, more precisely, to the interior of each cradle element, for example to promote normal maintenance operations and, in general, access to components housed inside the gripping device 1.

Each of the cradle-shaped elements preferably has a "U" -shaped cross section, although it is understood that alternative embodiments, not illustrated, are possible, which have a "V" or semicircular, semi-elliptical or polygonal conformation or more generally delimit a concavity facing the top portion.

Furthermore, each of the cradle elements has portions of opposite ends that are open or substantially open, that is, without obstacles so as not to impede the relative mobility between them along the gripping direction 10.

With reference to the embodiment illustrated in the attached Figures, the support structure 9 comprises an external cradle element 15, an internal cradle element 16 and at least one intermediate cradle element 17, wherein the intermediate cradle element 17 is interposed between the external cradle element 15 and the internal cradle element 17.

Hereinafter, sometimes, the external cradle element 15, the internal cradle element 16 and the intermediate cradle element 17 will be indicated by the expression cradle elements 15, 16, 17 for the sake of brevity.

Alternative embodiments are possible, not illustrated, comprising more intermediate cradle elements 17, for example two or more, falling within the same inventive concept of the gripping device 1 according to the invention. The total number of cradle elements present in the support structure 9 can vary according to some operating parameters including, for example, the maximum length along the gripping direction 10 that the gripping device 1 must assume or the maximum transportable load.

The support structure 9 comprises guide members configured to guide the reciprocal sliding between the individual cradle elements 15, 16, 17 along the gripping direction 10.

According to a preferred embodiment, the guide members comprise rails 18 aligned parallel to said gripping direction 10, slidingly engaged along respective sliding supports 19 configured for example as rolling bearings.

The connection between the rails 18 and the respective sliding supports 19 occurs in a manner available to the person skilled in the art which, therefore, will not be further disclosed.

It is understood that alternative embodiments of the guide members are possible, comprising for example bars, for example circular ones, slidingly engaged in respective bushings or similar systems even though they are capable of ensuring a sliding and guided motion along a predetermined direction.

With reference to the embodiment illustrated in the attached Figures, it should be noted that the guide members are installed at lateral portions of the cradle elements 15, 16, 17, in a position interposed between them, although it is understood that alternative embodiments comprising guide members installed in different positions, with reference for example to the bottom portion of each of the cradle elements 15, 16, 17, are possible.

In particular, the external cradle element 15 is slidingly connected to the connecting plates 14 through the guide members. The external cradle element 15, in turn, is slidingly connected to the intermediate cradle element 17 by means of guide members of the type described above. The intermediate cradle element 17 is then connected to the internal cradle element 16 through respective guide members.

As regards the sliding connection between the connecting plates 14 and the external cradle element 15, it is pointed out that in the attached Figures the guide members comprise sliding supports 19 connected to the connecting plates 14 and rails 18 connected externally to opposite side portions of the external cradle element 15.

In practice, both side portions of the external cradle element 15 are slidingly connected to the connecting plates 14, to ensure a stable and balanced connection.

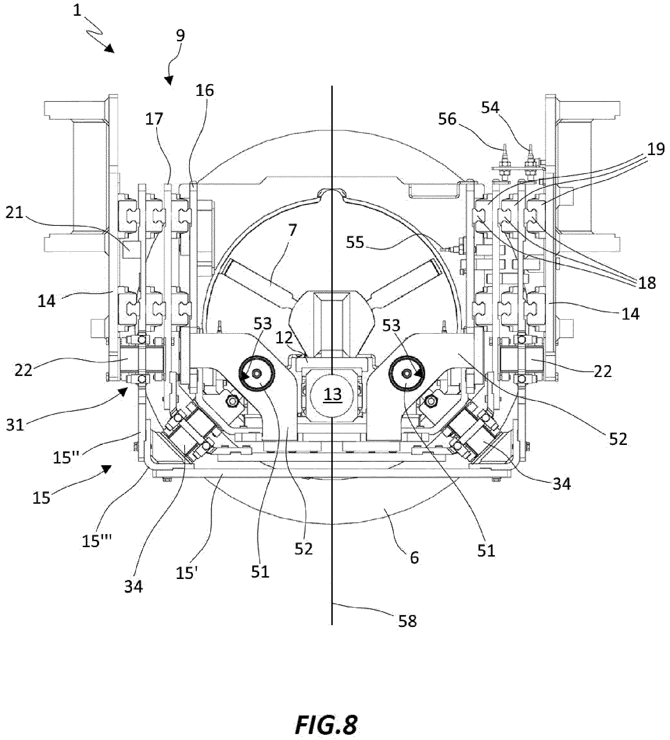

Furthermore, again with reference to the embodiment illustrated in the attached Figures, the guide members comprise at least one pair of rails 18, parallel to each other, in correspondence with each lateral portion of the external cradle element 15 (see, for example, Figure 8).

Guiding members configured in this way allow to increase the mechanical properties, with reference to the ability to ensure a smooth movement of the external cradle element 15 even in the presence of high loads to be moved through the gripping members 5.

As regards the sliding connection between the external cradle element 15 and the intermediate cradle element 17, the guide members correspond to those described above and comprise sliding supports 19 which internally protrude from opposite lateral portions of the element with external cradle 15 and slidingly engaging respective rails 18 constrained externally to lateral portions of the intermediate cradle element 17.

As regards the sliding connection between the intermediate cradle element 17 and the internal cradle element 16, similar considerations apply to those described above with reference to the connection between the external cradle element 15 and the intermediate cradle element 17. In practice, the intermediate cradle element 17 is connected to the internal cradle element 16 by means of guide members which include sliding supports 19 which protrude internally from lateral portions of the intermediate cradle element 17 and slidably engage respective rails 18 which they protrude externally from lateral portions of the internal cradle element 16.

With reference to what has been described above, it should be noted that the guide members can provide a different positioning of the sliding supports 19 and of the respective rails 18, that is to say in inverted positions with respect to those described previously.

According to alternative embodiments, not shown in the attached Figures, the gripping device 1 comprises further guiding members positioned at the bottom portion of each of the cradle elements 15, 16, 17 in addition to or to replace the guiding members previously disclosed.

The cradle elements 15, 16, 17 and the relative sliding connection hinder the onset of bending deformation phenomena of the support structure 9 during its extension/withdrawal along the gripping direction 10.

In practice, the support structure 9 has a high rigidity and flexural strength, even if it is of the extensible type, to promote a precise movement of the individual tools 6 held by the gripping members 5, overcoming a drawback that afflicts the solutions of the state of the art.

It should be noted that the guide and the drive members 13 are housed inside the cradle elements 15, 16, 17, thus being sheltered from the external environment but at the same time easily accessible for their eventual maintenance.

Since the guide to which the gripping members 5 is connected to the cradle elements 15, 16, 17 it follows that the gripping members 5, as mentioned, can be moved extremely precisely along the gripping direction 10, overcoming a drawback that afflicts prior art solutions.

According to a preferred embodiment of the invention, each or at least one of the cradle elements 15, 16, 17 is made through a plurality of plate elements mutually connected.

With reference to what is illustrated in the attached Figures, the external cradle element 15 includes a bottom plate element 15' connected to the opposite sides to a respective side plate element 15" by means of connection brackets 15"'.

The two side plate elements 15" are parallel to each other and both parallel to the gripping direction 10. The side plate elements 15" are orthogonal or substantially orthogonal to the bottom plate element 15'.

It is understood that alternative embodiments are possible, not shown in the Figures, wherein the side plate elements 15" are parallel to each other and inclined with respect to the bottom plate element 15' or, again, without the element a bottom plate 15', with the side plate elements 15' directly connected to each other by means of brackets.

Using several plate elements to obtain at least one of the cradle elements 15, 16, 17 simplifies the mechanical workings necessary for making openings or seats for connecting or housing the components of the gripping device 1.

Similarly to what has been explained in relation to the external cradle element 15, the internal cradle element 16 and/or the at least one intermediate cradle element 17 are made by joining several plate elements, respectively indicated in the attached Figures with references 16', 16"and 17', 17" (see for example Figure 5) mutually connected through respective connection brackets 16‴ and 17‴.

According to a further embodiment, at least one of the cradle elements 15, 16, 17 is made by means of a single plate element, suitably folded to assume a cradle configuration, with a "U" or "V" section or according to further variants described above, to which reference is made in full.

As mentioned, each of the cradle elements 15, 16, 17 has a respective open top portion to allow access to the inside of the gripping device, thus promoting any maintenance or verification of correct operation of the same.

The external cradle element 15 is interposed between the connecting plates 14 opposite and parallel to each other with respect to the gripping direction 10.

More precisely, each connecting plate 14 is connected slidingly to a respective side of the external cradle element 15, so as to allow the connection between the support structure 9 and the frame 2.

The internal cradle element 16 acts as a support to which the gripping members 5 are connected.

With the support structure 9 placed in an extended configuration (see Figures 4 and 5), the internal cradle element 16 is the most distal from the connecting plates 14, along the gripping direction 10, while the external cradle element 15 is the one closest to the connecting plates 14.

The gripping device 1 comprises movement members configured to operate the support structure 9 in motion along the gripping direction 10, that is to say to command the extraction or withdrawal of the individual cradle elements 15, 16 and 17.

The movement members comprise at least one motor unit 20 and transmission members configured to transmit the motion taken from the at least one motor unit 20 (see Figure 1, in the other Figures the motor unit has been intentionally omitted to facilitate understanding of the invention) and transmit it to the support structure 9 to selectively control the extraction or withdrawal of the individual cradle elements 15, 16 and 17.

The transmission members include at least one rack 21 externally constrained at the lateral portion of the external cradle element 15 and aligned parallel to the gripping direction 10.

The at least one rack 21 is configured to be engaged by a respective motorized pinion comprised in the at least motor unit 20. The direction and the time of actuation in rotation of the pinion determines the direction and the distance traveled by the external cradle element 15 along the gripping direction 10.

The transmission members are also configured to mechanically connect the cradle elements 15, 16 and 17 to each other and to synchronize their reciprocal movement along the gripping direction 10.

It is pointed out that in the attached Figures a single motor unit 20 and a respective rack 21 are shown, although it is understood that alternative embodiments are possible comprising two motor units 20, each positioned at one side of the support structure 9, configured to engage respective racks 21.

Depending on the number of cradle elements 15, 16 and 17 comprised in the support structure 9, the transmission members comprise one or more belt systems configured to mutually connect the cradle elements 15, 16 and 17 themselves and transmit their motion taken from the at least one motor unit 20.

In the following description reference will be made to a transmission unit configured to move a support structure 9 comprising an external cradle element 15, an internal cradle element 16 and an intermediate cradle element 17, although it is understood that similar considerations apply if the intermediate cradle element 17 is absent or there are several intermediate cradle elements 17 interposed between the external cradle element 15 and the internal cradle element 16.

With reference to the embodiment illustrated in the attached Figures, the transmission unit comprises at least a first belt system in turn comprising at least one drive belt 22, wound around two pulleys 23 rotatably connected to the external cradle element 15 itself.

The two pulleys 23 are positioned in such a way that the at least one drive belt 22 develops along a direction parallel to the gripping direction 10.

The external cradle element 15 has through openings 24 at which the pulleys 23 are rotatably supported so that a first branch 25 of the at least one drive belt 22 is positioned outside the external cradle element 15 and a second branch 26 of the at least one drive belt 22, opposite the first branch 25, is positioned inside the external cradle element 15.

More in detail, the first branch 25 is interposed between the external cradle element 15 and one of the connecting plates 14 while the second branch 26 is interposed between the external cradle element 15 and the at least one intermediate cradle element 17.

In practice, the at least one drive belt 22 is associated passing through a lateral side of the external cradle element 15.

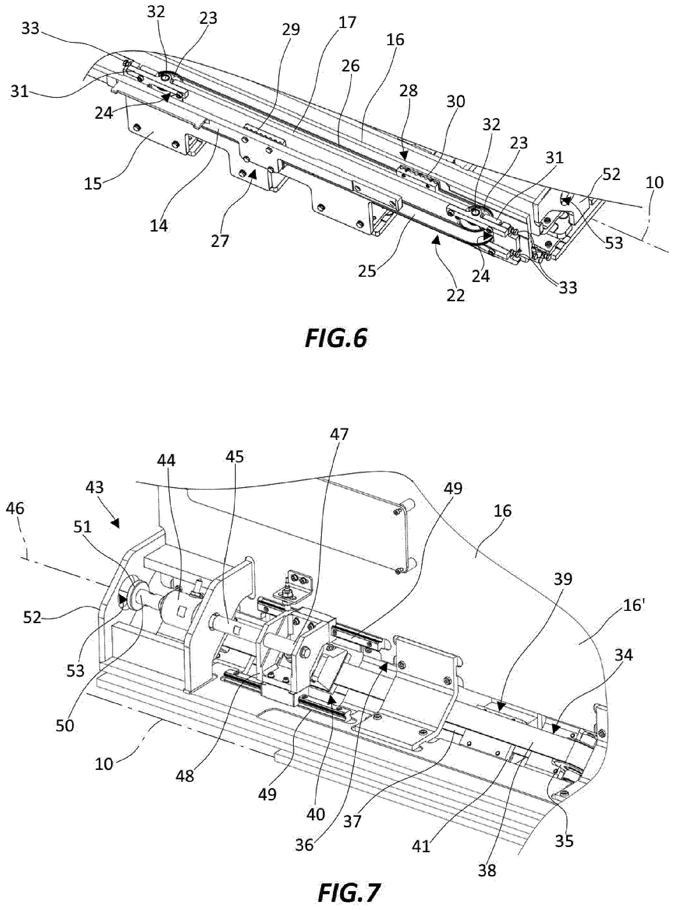

The transmission assembly comprises a first clamping element 27 configured to constrain a portion of the first branch 25 to a connecting plate 14 and a second clamping element 28 configured to constrain a portion of the second branch 26 to the at least one intermediate cradle element 17 (see the detail view of Figure 6).

The first clamping element 27 comprises a fixing plate 29 or the like which can be connected by means of screws or bolts to a portion of the connecting plate 14.

The first clamping element 27, therefore, is configured to firmly hold in position a portion of the drive belt 22, interposed between a respective portion of the connecting plate 14 and the fixing plate 29.

The fixing plate 29 optionally has a knurling or teeth or at least a raised element configured to be placed in abutment against a portion of the first branch 25, retaining it in the first clamping element 27, to promote a firm and secure grip thereof.

The second clamping element 28 comprises a further fixing plate 30 or similar that can be connected by means of screws or bolts to a portion of the at least one intermediate cradle element 17.

The second clamping element 28, therefore, similarly to what has been described in relation to the first clamping element 27, is configured to hold a portion of the drive belt 24 firmly in position.

In particular, the second clamping element 28 is configured to constrain a portion of the second branch 26 of the drive belt 22 to a portion of the intermediate cradle element 17.

The further fixing plate 30 optionally has a knurling or teeth or at least a raised element configured to be placed against a portion of the second branch 26 to be held in the second clamping element 28, to promote a firm and secure grip of the same.

With the gripping device 1 placed in a retracted configuration along the gripping direction 10 (see Figures 2 and 3), the at least one motor unit 20 is actuated to control, through the at least one rack 21, the advancement of the external cradle element 15 along the gripping direction 10. The advancement of the external cradle element 15 causes the drive belt 22 connected to it to be driven. The first branch 25 being constrained to the connecting plate 14 determines the movement of the drive belt 22 and the rotation of the pulleys 23, thus making the further fastening plate 30, constrained to the second branch 26, advance along the direction of grip 10. Consequently, the intermediate cradle element 17 is pushed forward, with a direction concordant with that of the external cradle element 15, along the gripping direction 10.

The at least one first belt system comprises at least one belt tensioner operatively connected to a pulley 23 and configured to vary the tension of the drive belt 22.

The at least one belt tensioner includes a support 31 configured to be constrained to the external cradle element 15, housed in the through opening 24 and a pivot 32 connected slidingly to the support 31 through a trolley system (see Figure 6).

The pivot 32 is configured to rotatably support a respective of the pulleys 23.

The at least one belt tensioner comprises adjustment members indicated as a whole with 33, such as screws or the like, configured to selectively adjust the position of the pivot 32 along the support 31.

In practice, by acting on the adjusting members 33 it is possible to vary the position of the pivot 32 along a direction parallel to the gripping direction 10 and, consequently, the position of the pulley 23 associated with this pivot 32, to increase or decrease the tension of the at least one drive belt 22, to promote its correct functioning and the eventual recovery of mechanical tolerances.

The attached Figures show a gripping device 1 comprising a respective belt tensioner operatively connected to each of the pulleys 23, although it is understood that an alternative embodiment is possible comprising a single belt tensioner operatively connected to a single pulley 23. This embodiment also allows to adjust the tension of the at least one drive belt 22.

The transmission unit then includes at least a second belt system configured to determine the drive of the internal cradle element 16 along the gripping direction 10, according to similar methods to those described in relation to the first belt system.

The second belt system includes at least one transmission belt 34 wound to assume a ring configuration around two internal pulleys 35 connected rotating to a lateral portion of the intermediate cradle element 17 (see Figures 7 and 8).

The return belt 34 is aligned parallel to the gripping direction 10.

The return belt 34 and the control belt 22 are positioned mutually spaced so as not to hinder each other during the extension or retraction movement of the support structure 9.

With reference to what is illustrated in the attached Figures, the transmission belt 34 is illustrated in correspondence with the bottom portion of the internal cradle element 16, although it is understood that, more generally, the positioning of the transmission belt 34, as well as that of the belt control 22 is a function of the free space available between the individual cradle elements 15, 16, 17. In this regard, it should be noted that since the cradle elements 15, 16, 17 are rigid bodies configured to be reciprocally actuated in rectilinear motion the positioning of the motion pick-up point necessary for their translation is indifferent, as long as this motion pick-up point belongs to the rigid body itself.

The intermediate cradle element 17 has at least one through seat 36 in correspondence with which the internal pulleys 35 are rotatably supported so that a first branch 37 of the at least one transmission belt 34 is positioned outside the cradle element intermediate 17 (see for example Figure 3) and a second branch 38 of the at least one transmission belt 34, opposite the first branch 37, is positioned inside the intermediate cradle element 17 (see Figure 7).

More in detail, the first branch 37 is interposed between the external cradle element 15 and the intermediate cradle element 17 while the second branch 38 is interposed between the at least one intermediate cradle element 17 and the internal cradle element 16.

In practice, the at least one return belt 34 is associated passing through a lateral side of the intermediate cradle element 17.

The transmission assembly comprises a third clamping element 39 configured to constrain a portion of the external branch 37 to the external cradle element 15 (see Figures 3 and 7) and a fourth clamping element 40 configured to constrain a portion of the internal branch 38 to the at least one internal cradle element 16 (see the detail view of Figure 7).

The third clamping element 39 comprises a plate 41 which can be connected by means of screws or bolts to a portion of the intermediate cradle element 17.

The third clamping element 39, therefore, is configured to hold a portion of the outer branch 37 firmly in position.

The plate 41 optionally has a knurling or teeth or at least a raised element configured to be placed in abutment against a portion of the external branch 37, retaining it in the third clamping element 39, to promote a firm and secure grip of the same.

The fourth clamping element 40, therefore, similarly to what has been described in relation to the third clamping element 39, is configured to firmly hold in position a portion of the internal branch 38 of the transmission belt 34.

The sliding actuation of the internal cradle element 16 by the movement of the intermediate cradle element 17 takes place according to similar methods to those described in relation to the movement of the latter by the external cradle element 15 described above, to which reference is made.

The gripping device 1 therefore comprises extremely effective movement members since due to the presence of transmission members including belt systems it is possible to synchronize the movement of the individual cradle elements 15, 16, 17 that make up the support structure 9 requiring a number limited number of motor units and, more generally, at least one power take-off to be transmitted to the individual cradle elements 15, 16, 17.

Furthermore, by exploiting belt systems it is possible to use rack-and-pinion motor units to control the selective actuation of the support structure 9 without resorting to complex systems including telescopic pistons or more complex kinematics.

The gripping device 1 comprises at least one force limiting device 43 operatively connected to the actuation members and configured to limit the axial thrust transmitted by the at least one motor unit 20 to the support structure 9 in the event of overload (see for example Figure 7).

The configuration and the operating principle of a force limiting device 43, of the type configured to limit an axial force, are available to a person skilled in the art and, therefore, the description of its components will be limited to the aspects useful for understanding the invention.

The force limiting device 43 comprises a body 44 axially engaged by a rod 45 which extends outside it.

The body 44 comprises a selective locking device, not shown in the attached figures, configured to selectively lock the mobility of the rod 45 relative to the body 44 along an axial direction 46.

The axial direction 46 is parallel to the gripping direction 10.

In practice, the selective locking device is configured to keep the rod 45 bound to the body 44 until an axial force acting on the rod 45 of intensity equal to a predetermined value is reached. When this threshold value is exceeded, the selective locking device releases the rod 45 from the body 44. Since the rod 45 is not further retained, it is free to slide axially with respect to the body 44, along the axial direction 46, preventing further transmission of the axial thrust between the rod 45 and the body 44 themselves.

The body 44 is bound to a portion of the internal cradle element 16, for example by means of a bracket.

The rod 45, on the other hand, is operationally connected at one of its ends 47 to the transmission belt 34 by means of a carriage 48.

More in detail, the rod 45 is supported at its end 47 by means of a carriage 48 slidingly connected to an internal portion of the internal cradle element 16.

The carriage 48 is connected to the internal cradle element 16 through at least one linear guide 49, of the type for example comprising a rail and a bearing. The carriage 48, in turn, is constrained to the fourth clamping element 40.

More in detail, the carriage 48 has a base portion which is connected to the fourth clamping element 40.

According to a preferred embodiment, the carriage 48 is connected to the fourth clamping element 40 by means of a connection of the removable type, by way of example a bolted connection or by means of screws or the like, to facilitate maintenance of the gripping device 1 in case of intervention on the transmission belt 34 or on the force limiting device 43.

The carriage 48 allows to guide the movement of the rod 45 relative to the body 44 along the axial direction 46 when they are axially released from each other.

In other words, the force limiting device 43 acts as a selective connection element between the second transmission system and the internal cradle element 16.

The force limiting device 43, therefore, is configured to ensure disengagement of the movement of the support structure 9 in the event of an overload. By way of example, an overload could occur if the gripping device 1 interferes with or abuts against a tool storage system, such as a magazine or a carousel system of the type known to the person skilled in the art, during the movement of extension of the support structure 9 itself along the gripping direction 10 to pick up the individual tools. In this case, the axial force limiting device 43 releases the transmission of motion between the at least one motor unit 20 and the support structure 9 with particular reference to the release between the at least one motor unit 20 and the cradle element internal 16, avoiding damage to the gripping device 1.

The rod 45 has a free end 50 at which a stop element 51 is constrained, configured to selectively abut against the body 44, acting as a mechanical stroke end element.

In particular, the stop element 51 is configured to limit the mobility of the rod 45 relative to the body 44 and to prevent it from being completely removed from the body 44 following the release of the rod 45.

In the attached Figures 4, 7 and 8 the stop element 51 is shown by way of example but not as a disc, although it is understood that the same may have alternative embodiments configured to block the advancement of the rod 45 relative to the body 44, with the force limiting device 43 in the release condition.

In the event that the force limiting device 43 is subjected to an axial stress higher than that of a threshold value, as mentioned, the rod 45 is released from the body 44.

In order to proceed with the reset of the force limiting device 43, where the term reset is intended to indicate the maneuver with which the rod 45 is brought back to a position of coupling with the body 44, bringing the force limiting device 43 back to full operation, it is sufficient to move the cradle elements 15, 16, 17, so as to move the at least one carriage 48 towards the body 44, thus moving the stop element 51 away from the body 44 until the rod 45 is brought back into position coupling with the body 44.

As mentioned, the body 44 is connected to the internal cradle element 16 through at least one bracket 52.

With reference to the detail illustrated, by way of example, in the attached Figure 7, the bracket 52 as well as acting as a connecting element between the body 44 and the internal cradle element 16 is configured to mutually connect portions of the internal cradle element 16, acting as a stiffening element.

The bracket 52 is configured not to hinder the access to the body 44, to the rod 45 and, more generally, to the force limiting device 43, to facilitate any maintenance and inspection.

The bracket 52 defines at least one access opening 53 to promote a rear access to the body 44, that is to say along one side of the gripping device 1 opposite to that from which the gripping members 5 extend.

The gripping device 1 comprises sensors configured to detect the mutual position of the components of the support structure 9.

In particular, the sensors allow to verify that the cradle elements 15, 16, 17 have reached at least one limit position.

By way of example, the gripping device 1 comprises at least one external position sensor 54 configured to detect at least the reaching of a predetermined position of the external cradle element 15 along the gripping direction 10. In particular, the at least one external sensor 54 is operatively connected to at least one of the connecting plates 14, so as to detect at least one position of the external cradle element 15 relative to the connecting plates 14 themselves.

Similarly, the gripping device 1 comprises at least one internal position sensor 55 configured to detect at least the reaching of a predetermined position of the internal cradle element 16 along the gripping direction 10.

Furthermore, the gripping device 1 comprises at least one intermediate position sensor 56 operatively connected to the intermediate cradle element 17 and configured to detect at least the reaching of a predetermined position of the at least one intermediate cradle element 17 along the gripping direction 10.

The gripping device 1 comprises at least one encoder, not shown in the attached Figures, operatively connected to the at least one motor unit 20 and configured to detect the configuration assumed by the gripping device 1, i.e. its length along the gripping direction 10.

The encoder is therefore positioned upstream of the kinematic transmission through which the individual cradle elements 15, 16, 17 are moved together, allowing to estimate the configuration assumed by the gripping device 1, i.e. a completely extracted configuration, completely retracted or intermediate positions, even in the event of failure or breakage of the transmission components.

The at least one external sensor 54, internal 55 and intermediate 56, contrary to the encoder, are mounted downstream of the transmission members and, synergistically with the encoder, ensure a correspondence between the foreseen position and the actual position assumed by the gripping device 1.

Knowing the actual position and configuration assumed by the gripping device 1, and therefore the relative position of the gripping members 5 with respect to the connecting plates 14, allows the safe handling of the gripping device 1, avoiding accidental impact against obstacles or portions of the tool storage magazine near which the gripping device 1 can be moved.

The gripping device 1 comprises at least one control logic unit 57 (schematically illustrated in Figures 2 and 4) configured to control and command the operation of the gripping device 1 itself. The at least one control logic unit 57 is operationally connected to the gripping members 5 and the handling members 4 to control the advancement and the gripping or releasing actuation of the gripping members 5 along the gripping direction 10.

Furthermore, the at least one logic control unit 57 is operationally connected to the at least one motor unit 20, the at least one external sensor 54, the at least one internal sensor 55 and the at least one intermediate sensor 56 for controlling the drive in movement of the support structure 9 along the gripping direction 10.

With reference to the embodiment illustrated in the attached Figures, the gripping device 1 has an overall symmetrical structure with respect to a central plane of symmetry 58 which extends along a direction parallel to the gripping direction 10 (see Figure 8). In this regard, it should be noted that the support structure 9 also has a substantially symmetrical structure with respect to the plane of symmetry 58, to the advantage of a balanced weight distribution and greater stability.

The gripping device 1 has movement members and transmission members which are also symmetrical with respect to the central plane of symmetry 58.

In other words, according to a preferred embodiment, the gripping device 1 comprises a pair of drive belts 22, each operatively connected to a respective lateral portion of the external cradle element 15, as well as a pair of transmission belts 34 each connected to a respective portion of the intermediate cradle element 17. The symmetrical configuration of the movement members and of the transmission members allows to obtain an even more balanced actuation of the gripping device 1 during its movement between an extracted configuration and a configuration withdrawn along the gripping direction 10. It is understood that a gripping device 1 according to the invention can equally have an asymmetrical configuration as regards the positioning of the movement members and transmission members along the support structure 9, even in the scope of a stable and flowing solution along the gripping direction of 10.

Below is a brief description of the operation of the gripping device 1 with particular reference to the movement of the support structure 9 between the withdrawn configuration and the extracted configuration.

With the gripping device 1 in the retracted configuration, the at least one motor unit 20 is operated by moving the at least one rack 21 engaged by it to determine the movement of the external cradle element 15 along the gripping direction 10.

Following the advancement of the external cradle element 15 along the gripping direction 10, the movement of the at least one drive belt 22 is determined. This, in fact, has the first branch 25 constrained to one of the connecting plates 14 which support the external cradle element 15, and the second branch 26 operatively associated with the intermediate cradle element 17. The advancement of the external cradle element 15 along the gripping direction 10 in turn determines the advancement of the element with intermediate cradle 17 due to the movement of the drive belt 22. The advancement of the intermediate element 17 along the gripping direction 10, in turn, determines the advancement of the internal cradle element 16 to which it is operatively connected by means of the at least one transmission belt 34. Therefore, the advancement of the external cradle element 15 determines the simultaneous and synchronized advancement of the intermediate cradle element 17 and of the cradle element internal 16 by effect of the transmission members, until it reaches the completely extracted configuration (see for example Figures 4 and 5).

The extended movement of the support structure 9 allows to position the gripping members 5 in correspondence with a pick-up or release point of a cutting tool to be picked up or released.

The presence of at least one force limiting device 43 allows the internal cradle element 16 to be disconnected from the intermediate cradle element 17 in the event that an axial force value greater than a predetermined value is reached, thus allowingto preserve the device socket 1 from any damage.

The gripping members 5 are in turn slidingly associated with the internal cradle element 16 to be moved further along the gripping direction 10 and facilitate the gripping or release of a tool to be moved.

The conformation of the support structure 9 confers a high structural rigidity to the gripping device 1, ensuring correct movement and precision in the alignment of the gripping members 5 along the gripping direction 10, avoiding displacements or misalignments with respect to a predetermined positioning due to the loading of the at least one tool moved by the gripping device 1 affecting the solutions of the prior art.

The presence of a support structure 9 of the extensible type allows a high axial stroke of the gripping members 5 along the gripping direction 10, with values higher than those allowed by the solutions of the traditional type without a support structure 9 of the extendable type.

In the foregoing, the preferred embodiments have been described and variants of the present invention have been suggested, but it is understood that those skilled in the art will be able to make modifications and changes without thereby departing from the relative scope of protection, as defined by the claims attached.

## Claims

1. Gripping device (1) configured for gripping a tool (6), wherein said gripping device (1) comprises:
gripping members (5),
a support structure (9) configured to support and move said gripping members (5) along a gripping direction (10),
wherein said gripping members (5) are housed inside said support structure (9) and slidingly connected to it by means of a guide and operable in sliding motion along said gripping direction (10),
connecting plates (14) operatively connected externally to opposite sides of said support structure (9) and configured to connect said support structure (9) to a frame (2),
said support structure (9) being configured to vary its length along said gripping direction (10) between a retracted position, wherein it has a minimum length, and an extracted position wherein it has a maximum length,
wherein said support structure (9) comprises cradle elements (15, 16, 17) each delimiting a bottom portion which delimits a concavity facing a top portion of said cradle elements (15, 16, 17), said cradle elements (15, 16, 17) being housed internally to each other and mutually connected in a sliding manner along said gripping direction (10),
said gripping device (1) comprising movement members and transmission members configured to selectively drive said cradle elements (15, 16, 17) in motion and synchronize their mutual movement along said gripping direction (10).

2. Gripping device (1) according to claim 1, wherein each of said cradle elements (15, 16, 17) has a respective opened top portion to allow the access inside it.

3. Gripping device (1) according to claim 1 or 2, wherein said support structure (9) comprises an external cradle element (15), an internal cradle element (16) and at least one intermediate cradle element (17) interposed between said external cradle element (15) and said internal cradle element (17) and guide members configured to guide the mutual sliding between said external cradle element (15), said intermediate cradle element (17) and said internal cradle element (16) along said gripping direction (10).

4. Gripping device (1) according to claim 3, wherein said guide members comprise rails (18) aligned parallel to said gripping direction (10) and slidingly engaged in respective sliding supports (19).

5. Gripping device (1) according to claim 3, wherein said external cradle element (15), said internal cradle element (16) and said at least one intermediate cradle element (17) have a "U" or "V" or semicircular or semi-elliptical or polygonal cross section capable of delimit a bottom portion delimited between opposite lateral portions, wherein said bottom portion delimits a concavity.

6. Gripping device (1) according to any one of the claims 3 to 5, wherein at least one of said external cradle element (15), said internal cradle element (16) and said at least one intermediate cradle element (17) is made by joining several plate elements mutually connected by respective brackets connection.

7. Gripping device (1) according to any one of the preceding claims, wherein said gripping members (5) are connected slidingly to said support structure (9) by means of a guide, wherein said guide comprises a track (11) connected to a portion of said support structure (9) and a trolley (12) which slidingly engages said track (11), along said gripping direction (10), said gripping device (1) comprising actuation members (13) operatively connected to said trolley (12) and configured to actuate said trolley (12) selectively along said gripping direction (10) between a retracted position, wherein said gripping members (5) are positioned in proximity to said gripping device (1) and an extracted position wherein said gripping members (5) protrude cantilevered from said gripping device (1), wherein said guide and said actuation members (13) are housed inside said cradle elements (15, 16, 17).

8. Gripping device (1) according to claim 3, wherein movement members comprise at least one motor unit (20) connected to one of said connecting plates (14) and said transmission members comprise at least one rack (21) constrained externally to a lateral portion of said external cradle element (15) and configured to be engaged by a motorized pinion comprised in said at least one motor unit (20), said at least one rack (21) being aligned parallel to said gripping direction (10).

9. Gripping device (1) according to claim 8, wherein said transmission members comprise at least one drive belt (22) wrapped around two pulleys (23) rotatably connected to said external cradle element (15), said at least one drive belt (22) having a first branch (25) delimited between said pulleys (23) which extends externally to said external cradle element (15) and a second branch (16) delimited between said pulleys (23) which extends internally to said external cradle element (15), wherein said first branch (25) is operatively connected to one of said connecting plates (14) and said second branch (26) is connected to a lateral portion of said at least one intermediate cradle element (17).

10. Gripping device (1) according to claim 8 or 9, wherein said transmission members comprise a second belt system comprising at least one transmission belt (34) wound around two internal pulleys (35) each rotatably connected to a lateral portion of said intermediate cradle element (17), wherein said at least one transmission belt (34) has an external branch (37) delimited between said internal pulleys (35) which extends externally to said intermediate cradle element (17) and an internal branch (38) delimited between said internal pulleys (35) which extends internally to said intermediate cradle element (17), wherein said external branch (37) is operatively connected to said external cradle element (15) and said internal branch (38) is connected to said at least one internal cradle (16).

11. Gripping device (1) according to claim 9 and 10, wherein said at least one drive belt (22) and said at least one transmission belt (34) are aligned parallel to each other and to said gripping direction (10).

12. Gripping device (1) according to claim 3, comprising at least one force limiting device (43) operatively connected to said actuation members and is configured to limit an axial force transmitted by said at least one motor unit (20) to said support structure (9) in case of exceeding an axial force value predetermined, said force limiting device (43) comprising a body (44) operatively connected to said internal cradle element (16) and a rod (45) selectively sliding in said body (44) along a direction parallel to said direction of socket (10), said rod (45) being operatively connected to said at least one transmission belt (34).

13. Gripping device (1) according to claim 12, wherein said rod (45) is aligned along an axial direction (46) parallel to said gripping direction (10) and has one end (47) connected to a carriage (48) slidingly engaged along a linear guide (49) associated with said internal element cradle (16), wherein said carriage (48) in turn is operationally connected to a portion of said internal branch (38) of said at least one transmission belt (34).

14. Gripping device (1) according to claim 3, comprising position sensors configured to detect the position of at least one of said external cradle element (15), said internal cradle element (16) and said at least one intermediate cradle element (17), said sensors being operationally connected to at least one unit control logic (57) in turn operatively connected to said moving members and said gripping members (5) to control and command the operation of said gripping device (1) and the movement of said support structure (9) along said gripping direction (10).
